# EUROPÄISCHE PATENTSCHRIFT

(11) **EP 1 122 574 B1**
(45) Veröffentlichungstag und Bekanntmachung des Hinweises auf die Patenterteilung: **23.11.2011**
(21) Anmeldenummer: 01101919.7
(22) Anmeldetag: 27.01.2001
(51) Int. Cl.: G02B 21/00, G02B 21/18

(54) **Mikroskop-Aufbau**
Microscope arrangement
Arrangement de microscope

(30) Priorität: 01.02.2000 DE 10004233
(43) Veröffentlichungstag der Anmeldung: 08.08.2001
(73) Patentinhaber: Leica Microsystems CMS GmbH, 35578 Wetzlar (DE)
(72) Erfinder: Engelhardt, Johann, Dr., 76669 Bad Schönborn (DE); Ulrich, Heinrich, Dr., 69121 Heidelberg (DE)
(74) Vertreter: Reichert, Werner Franz

(56) Entgegenhaltungen:
- WO-A-99/37999
- DE-A- 19 906 757
- US-A- 5 386 112
- US-A- 5 671 085
- US-A- 5 760 951

## Beschreibung

Die Erfindung betrifft einen Mikroskop-Aufbau für die konfokale Scan-Mikroskopie, mit einer Lichtquelle zur Beleuchtung eines zu untersuchenden Objekts mit Anregungslicht, wobei mindestens zwei Detektionslicht aufweisende Detektionskanäle erzeugt sind.

Mikroskop-Aufbauten der eingangs genannten Art sind bekannt und existieren In den unterschiedlichsten Ausführungsformen. Ein Beispiel eines derartigen Mikroskop-Aufbaus wird durch ein konfokales Scan-Mikroskop gebildet, bei dem ein zu untersuchendes Objekt mit einem Lichtstrahl bzw. dem Anregungslicht abgerastert wird. Das Mikroskop umfaßt eine Lichtquelle und eine Fokussieroptik, mit der das Licht der Quelle auf eine Lochblende fokussiert wird. Dabei sind ein Strahlteiler, eine Scaneinrichtung zur Strahlsteuerung, eine Mikroskopoptik, eine Detektionsblende und Detektoren zum Nachweis von Detektions- bzw. Fluoreszenzlicht vorgesehen.

Das Beleuchtungslicht wird meist über den Strahlteiler eingekoppelt. Der Fokus des Lichtstrahls wird mit der Scaneinrichtung in einer Probenebene bewegt. Hierzu sind üblicherweise zwei Spiegel verwendet, die verkippt werden, wobei die Ablenkachsen meist senkrecht aufeinanderstehen, so dass ein Spiegel in X- und der andere in Y-Richtung ablenkt. Die Verkippung der Spiegel wird bspw. mit Hilfe von Galvanometer-Stellelementen bewerkstelligt. Das von der Probe kommende Fluoreszenz- oder Reflexionslicht gelangt in dieser meist üblichen Descan-Anordnung über dieselben Scanspiegel zurück zum Strahlteiler und passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so daß man eine Punktinformation erhält, die durch Abrastern des Objekts zu einem dreidimensionalen Bild führt. Beleuchtung und Detektion finden hierbei objektivseitig, d. h. auf Seiten der Mikroskopoptik statt.

Es ist auch möglich, in einer Durchlichtanordnung das Fluoreszenzlicht oder das Transmissionslicht - die Transmission des Anregungslichts - kondensorseitig, d.h. auf der Seite eines nach dem Objekt angeordneten Kondensors, zu detektieren. Der Detektionslichtstrahl gelangt dann nicht über die Scanspiegel zum Detektor. Eine derartige Anordnung wird als Non-Descan-Anordnung bezeichnet.

Für die Detektion des Fluoreszenzlichts wäre in der Durchlichtanordnung eine kondensorseitige Detektionsblende nötig, um - wie in der beschriebenen Descan-Anordnung - eine dreidimensionale Auflösung zu erreichen. Im Fall der Zweiphotonenanregung kann jedoch auf eine kondensorseitige Detektionsblende verzichtet werden, da die Anregungswahrscheinlichkeit vom Quadrat der Photonendichte bzw. der Intensität abhängt, die naturgemäß im Fokus viel höher ist als in den Nachbarregionen. Das zu detektierende Fluoreszenzlicht stammt daher mit großer Wahrscheinlichkeit zum allergrößten Teil aus der Fokusregion, was eine weitere Differenzierung von Fluoreszenzphotonen aus der Fokusregion von Fluoreszenzphotonen aus den Nachbaregionen mit einer Blendenanordnung überflüssig macht. Aber auch bei der Einphotonenanregung kann die Detektion des Transmissionslichts und/oder die kondensorseitige Detektion des Fluoreszenzlichts hilfreich sein.

Insbesondere vor dem Hintergrund einer ohnehin geringen Ausbeute an Fluoreszenzphotonen bei der Zweiphotonenanregung ist eine Non-Descan-Anordnung, bei der im allgemeinen auf dem Detektionslichtweg weniger Licht verloren geht, interessant.

Aus der EP 0 627 643 A1 ist es bekannt, die Signalausbeute durch elektronische Addition der Signale des Descan- und des Non-Descan-Detektors zu steigern. Dabei werden also zwei Detektionskanäle elektronisch überlagert.

Bei der bekannten elektronischen Addition bzw. Überlagerung der Signale ist nunmehr problematisch, dass diese Form der elektronischen Überlagerung der Detektorsignale aufwendig und langsam ist. Insbesondere müssen die verwendeten Detektoren aufwendig eingestellt werden.

Die Druckschrifter US 5 386 112 A, WO 99/37999 A, US 5 760 951 A und US 5 671 085 A stellen den Stand der Technik dar. Der vorliegenden Erfindung liegt daher die Aufgabe zugrunde, einen Mikroskop-Aufbau der eingangs genannten Art anzugeben, bei dem eine hohe Signalausbeute und ein hohes Signal-Rausch-Verhältnis mit einfachen Mitteln erreicht ist.

Die voranstehende Aufgabe wird durch einen Mikroskop-Aufbau mit den Merkmalen des Patentanspruchs 1 gelöst. Danach ist der Mikroskop-Aufbau der eingangs genannten Art derart ausgestaltet, dass mindestens zwei Detektionskanäle mittels einer Überlagerungseinrichtung optisch überlagerbar sind.

In erfindungsgemäßer Weise ist zunächst erkannt worden, dass eine Steigerung der Signalausbeute nicht ausschließlich durch eine elektronische Addition der Signale der verwendeten Detektoren erreichbar ist. Hierzu ist erfindungsgemäß eine optische Überlagerung mindestens zweier Detektionskanäle mittels einer Überlagerungseinrichtung vorgesehen. Auf störanfällige elektronische Bauteile, die bei dem bekannten Mikroskop-Aufbau zusätzlich integriert werden müssen, kann bei dem erfindungsgemäßen Mikroskop-Aufbau gänzlich verzichtet werden. Dabei entfällt dann auch die aufwendige Einstellung der verwendeten Detektoren. Schließlich ist mit der optischen Überlagerung eine schnellere Überlagerungs-bzw. Additionstechnik als die herkömmliche elektronische Additionstechnik bereitgestellt.

Folglich ist mit dem erfindungsgemäßen Mikroskop-Aufbau ein Mikroskop-Aufbau realisiert, bei dem eine hohe Signalausbeute und ein hohes Signal-Rausch-Verhältnis mit einfachen Mitteln erreicht ist.

Im konkreten könnte das Detektionslicht mindestens zweier Detektionskanäle in einem gemeinsamen sowie mindestens einen Detektor aufweisenden Detektor-Aufbau detektierbar sein. Es könnten jedoch auch mehr als zwei Detektionskanäle in einem gemeinsamen Detektor-Aufbau detektierbar sein.

Der Ort der Überlagerung des Detektionslichts der jeweiligen Detektionskanäle ist grundsätzlich nicht vorgegeben. In einer konstruktiv besonders einfachen Ausführung kann das Detektionslicht der Detektionskanäle jedoch in dem Detektor-Aufbau optisch überlagert werden. Dabei wird das Detektionslicht der jeweiligen Detektionskanäle in geeigneter Weise dem Detektor-Aufbau zugeleitet.

Der Detektor-Aufbau kann ein Descan-Detektor-Aufbau sein, wobei es in praktischer Weise möglich ist, einen bei einem Mikroskop-Aufbau häufig bereits vorhandenen Descan-Detektor-Aufbau zur optischen Überlagerung zu nutzen. Ein zusätzlicher Detektor-Aufbau ist somit nicht erforderlich.

In einer konkreten Ausgestaltung kann ein erster Detektionskanal Detektionslicht aufweisen, das auf der der Lichtquelle zugewandten Seite des Objekts emittiert wird, und kann ein zweiter Detektionskanal Detektionslicht aufweisen, das auf der der Lichtquelle abgewandten Seite des Objekts emittiert wird. Genauergesagt kann der erste Detektionskanal Reflexions-und Fluoreszenzlicht aufweisen. Der zweite Detektionskanal kann hingegen Transmissions- und Fluoreszenzlicht aufweisen.

Der Detektor-Aufbau kann dem ersten Detektionskanal zugeordnet sein. Mit anderen Worten kann es sich dabei um einen Detektor-Aufbau handeln, der bei einem herkömmlichen Mikroskop-Aufbau in Descan-Anordnung bereits vorhanden ist.

Hinsichtlich einer konkreten Überlagerung von zwei Detektionskanälen kann das Detektionslicht des zweiten Detektionskanals mittels der Überlagerungseinrichtung zu dem Detektor-Aufbau geleitet werden. Dabei kann es sich um einen bereits vorhandenen Descan-Detektor-Aufbau handeln.

Im Hinblick auf eine effektive optische Überlagerung der Detektionskanäle kann Reflexionslicht des ersten Detektionskanals und Transmissionslicht des zweiten Detektionskanals gemeinsam, vorzugsweise in ein und demselben Detektor, detektierbar sein. Dabei kann das Reflexionslicht des ersten Detektionskanals und das Transmissionslicht des zweiten Detektionskanals etwa in demselben Wellenlängenbereich liegen.

Weiterhin im Hinblick auf eine effektive Überlagerung der Detektionskanäle kann Fluoreszenzlicht des ersten Detektionskanals und Fluoreszenzlicht des zweiten Detektionskanals gemeinsam, vorzugsweise in ein und demselben Detektor, detektierbar sein. Hierbei kann Fluoreszenzlicht des ersten Detektionskanals und Fluoreszenzlicht des zweiten Detektionskanals etwa in demselben Wellenlängenbereich liegen.

Je nach Anzahl an zu detektierenden Wellenlängenbereichen können mehrere Detektoren vorgesehen sein für unterschiedliche Wellenlängenbereiche.

Zur Gewährleistung einer sicheren Überlagerung der Detektionskanäle weist die Überlagerungseinrichtung eine Lichtleiteinrichtung auf. In konstruktiv besonders einfacher Weise weist die Lichtleiteinrichtung eine Lichtleitfaser auf. Hierbei sind insbesondere Glasfasern einsetzbar.

Lichtleitfaser kann eine Lichteinkoppeloptik und eine Lichtauskoppeloptik zugeordnet sein.

im Hinblick auf eine besonders selektive Detektion des Detektionslichts kann dem Detektor-Aufbau eine Lichtaufspalteinrichtung zur Aufspaltung des Detektionslicht in unterschiedliche Wellenlängenbereiche zugeordnet sein. Die Lichlaufspalteinrichtung kann mindestens einen Farbstrahlteiler aufweisen. Dabei können mehrere Farbstrahlteiler hintereinander angeordnet sein, um eine Abspaltung unterschiedlicher Wellenlängen oder Wellenlängenbereiche zu ermöglichen.

Zusätzlich hierzu kann die Lichtaufspalteinrichtung mindestens einen teildurchlässigen Spiegel aufweisen. Diesem Spiegel kann ein Bandoder Blockfilter nachgeordnet sein. Auch bei der Verwendung von Spiegeln als Aufspaltungsbauteil können mehrere derartige Spiegel hintereinander, ggf. mit einem nachgeordneten Band- oder Blockfilter, angeordnet sein. Auch hierdurch ist eine Aufspaltung des Fluoreszenzlichts in mehrere Spektralbereiche möglich.

Als Lichtquelle kann in besonders vorteilhafter Weise ein Laser verwendet sein. Es ist jedoch auch die Verwendung anderer geeigneter Lichtquellen denkbar. In der Zeichnung zeigen
- Fig. 1: in einer schematischen Darstellung ein Ausführungsbeispiel eines erfindungsgemäßen Mikroskop- Aufbaus,
- Fig. 2: in einer schematischen Darstellung ein nicht beanspruchtes Vergleichsbeisplel eines Mikroskop-Aufbaus mit einem separaten Non-Descan-Detektor-Aufbau und
- Fig. 3: in einer schematischen Darstellung ein zweites, nicht beanspruchtes Vergleichsbeispiel eines Mikroskop-Aufbaus mit einem separaten Non-Descan-Detektor-Aufbau.

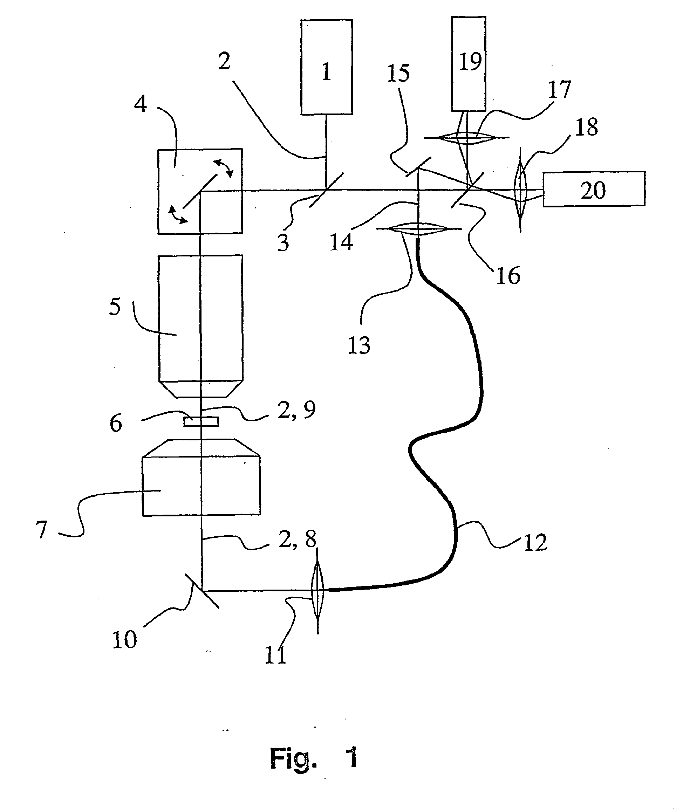

Fig. 1 zeigt in einer schematischen Darstellung ein Ausführungsbeispiel eines erfindungsgemäßen Mikroskop-Aufbaus. Bei dem Mikroskop-Aufbau handelt es sich um ein konfokales Laser-Scanning-Mikroskop. Das Mikroskop weist eine als Laser ausgebildete Lichtquelle 1 auf. Die Lichtquelle 1 emittiert Anregungslicht 2, das über einen Hauptstrahlteiler 3 zu einer Scaneinrichtung 4 reflektiert wird. Die Scaneinrichtung 4 führt den Anregungslichtstrahl durch eine Mikroskopoptik bzw. ein Objektiv 5 hindurch über ein Objekt 6. Durch das Objekt 6 hindurchtretendes Transmissionslicht und im Objekt 6 erzeugtes Fluoreszenzlicht treten durch einen Kondensor 7 hindurch, wobei sie ein kondensorseitiges Detektionslicht 8 bilden. Vom Objekt 6 reflektiertes Anregungslicht 2 und in dem Objekt 6 erzeugtes Fluoreszenzlicht bilden ein objektivseitiges Detektionslicht 9.

Das kondensorseitige Detektionslicht 8 gelangt des weiteren über einen umlenkenden Spiegel 10 zu einer Einkoppeloptik 11, die das Detektionslicht 8 in eine Lichtleitfaser 12 einkoppelt. Am Ende der Lichtleitfaser 12 ist eine Auskoppeloptik 13 vorgesehen, aus der ausgekoppeltes Detektionslicht 14 austritt, welches über einen Spiegel 15 zu einem Farbstrahlteiler 16 reflektiert wird. Auf den Farbstrahlteiler 16 wird auch das objektivseitige Detektionslicht 9 reflektiert, das über die Scaneinrichtung 4 geleitet ist. Mit anderen Worten gelangt das Detektionslicht 9 über einen Descan-Lichtweg.

Der Farbstrahlteiler 16 reflektiert den spektral niedrigerwelligen Bereich des Lichts über eine Fokussieroptik 17 zu einem Detektor 19. Der spektral höherwellige Anteil des Detektionslichts gelangt über eine Fokussieroptik 18 zu einem Detektor 20. Hierbei ist ein Descan-Detektor-Aufbau verwendet, der die beiden Detektoren 19 und 20 aufweist und bei herkömmlichen Mikroskop-Aufbauten der eingangs genannten Art bereits vorhanden ist.

Bei dem in Fig. 1 dargestellten Ausführungsbeispiel wird das Transmissionslicht sowie das objektrückseitig emittierte Fluoreszenzlicht mit Hilfe einer Lichtleitfaser 12 zu den bereits vorhandenen Detektoren 19 und 20 geleitet und dort gemeinsam mit dem über die Scaneinrichtung 4 laufenden Reflexions- und Fluoreszenzlicht detektiert.

Hierbei werden zwei Detektoren 19 und 20 verwendet, wobei den Detektoren 19 und 20 mit Hilfe eines Farbstrahlteilers 16 Licht unterschiedlicher Wellenlänge zugeleitet ist. Dabei stimmen die Wellenlängenbereiche des zu einem Detektor geführten Transmissionslichts bzw. des objektrückseitig emittierten Fluoreszenzlichts mit dem Wellenlängenbereich des mit diesem Detektor zu detektierenden Reflexions- bzw. Fluoreszenzlicht vorzugsweise überein.

Mit anderen Worten ist ein Mikroskop-Aufbau mit einer Lichtquelle 1 zur Beleuchtung eines zu untersuchenden Objekts 6 mit Anregungslicht 2 realisiert, wobei mindestens zwei Detektionslicht 8 und 9 aufweisende Detektionskanäle erzeugt sind. Der eine Detektionskanal weist dabei Detektionslicht 8 und der andere Detektionslicht 9 nach im Hinblick auf eine hohe Signalausbeute und ein hohes Signal-Rausch-Verhältnis ist der Mikroskop-Aufbau derart ausgestaltet, dass mindestens zwei Detektionskanäle mittels einer Überlagerungseinrichtung optisch überlagerbar sind. Die Überlagerungseinrichtung weist gemäß Fig. 1 im konkreten eine Einkoppeloptik 11, eine Lichtleitfaser 12, eine Auskoppeloptik 13, einen Spiegel 15, eine Fokussieroptik 17 und eine Fokussieroptik 18 auf.

Der spektral niedrigerwellige Bereich des Fluoreszenzlichts des Detektionslichts 8 und des Detektionslichts 9 wird im Detektor-Aufbau optisch überlagert. Des weiteren wird das Transmissionslicht und das Reflexionslicht im Detektor-Aufbau optisch Überlagert.

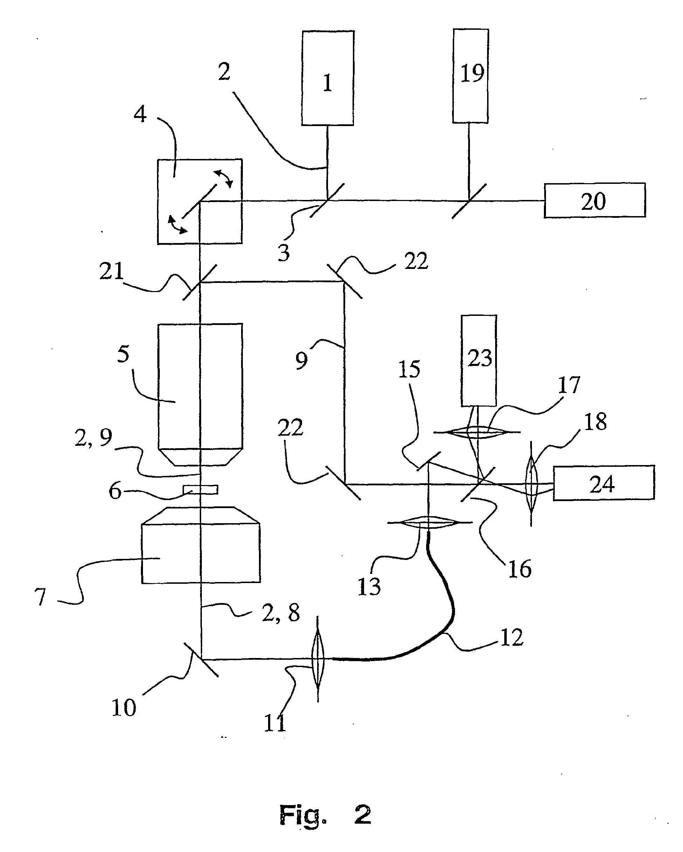

Fig. 2 zeigt in einer schematischen Seitenansicht ein Vergleichsbeispiel eines erfindungsgemäßen Mikroskop-Aufbaus. Der Mikroskop-Aufbau entspricht in wesentlichen Teilen dem bereits in Fig. 1 gezeigten Ausführungsbeispiel. Daher sind gleiche Bauteile der beiden Beispiele mit denselben Bezugsziffern gekennzeichnet.

Bei dem in Fig. 2 gezeigten Vergleichsbeispiel handelt es sich um einen Mikroskop-Aufbau mit einem zusätzlichen Non-Descan-Detektor-Aufbau. Dabei wird Detektionslicht 9 aus einem ersten Detektionskanal vor seinem Durchgang durch die Scaneinrichtung 4 zu dem Non-Descan-Detektor-Aufbau geleitet. Hierzu ist zwischen der Scaneinrichtung 4 und dem Objektiv 5 ein Farbstrahlteiler 21 angeordnet, der das Detektionslicht 9 aus dem ursprünglichen Strahlengang auskoppelt. Das reflektierte Anregungslicht gelangt hier somit nicht zum Detektor und wird somit auch nicht überlagert.

Zur weiteren Leitung des Detektionslichts 9 sind Spiegel 22 vorgesehen, die das objektivseitig emittierte Detektionslicht 9 weiter zum Farbstrahlteiler 16 in den Detektor-Aufbau hereinführen. Die Zukopplung des kondensorseitig emittierten Detektionslichts 8, das Transmissionslicht und in dem Objekt 6 erzeugtes Fluoreszenzlicht aufweist, erfolgt analog zum in Fig. 1 gezeigten Ausführungsbeispiel. Anstelle der beim Ausführungsbeispiel verwendeten Detektoren 19 und 20 werden beim in Fig. 2 gezeigten Vergleichsbeispiel Detektoren 23 und 24 verwendet.

Bei der optischen Überlagerung der Detektionskanäle ist eine Kombination realisiert, die einerseits eine Lichtleitfaser 12 und andererseits eine Spiegelanordnung mit Spiegeln 22 verwendet.

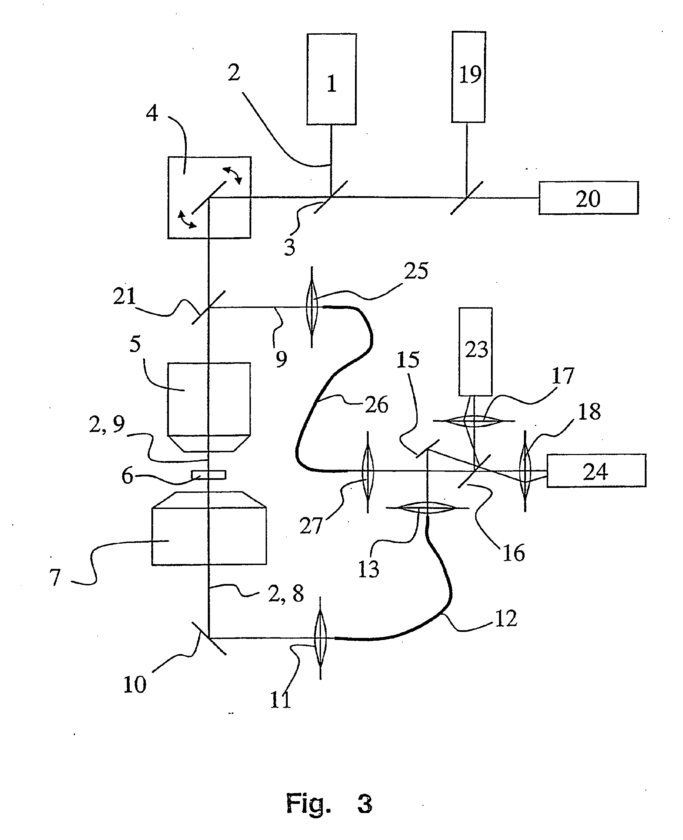

Fig. 3 zeigt in einer schematischen Darstellung ein zweites Vergleichsbeispiel eines erfindungsgemäßen Mikroskop-Aufbaus. Das in Fig. 3 gezeigte zweite Vergleichsbeispiel ist analog zu dem in Fig. 2 gezeigten Vergleichsbeispiel ausgebildet Der einzige Unterschied besteht darin, dass das objektivseitig emittierte Detektionslicht 9 - anstatt über Spiegel - über eine Einkoppeloptik 25, eine Lichtleitfaser 26 und eine Auskoppeloptik 27 zu dem Non-Descan-Detektor-Aufbau geleitet wird. Ansonsten entspricht der Aufbau des zweiten Vergleichsbeispiels dem Aufbau des ersten Vergleichsbeispiels. Auch hier gelangt somit das reflektierte Anregungslicht nicht zum Detektor.

Sowohl beim ersten Vergleichsbeispiel als auch beim zweiten Vergleichsbeispiel werden die Detektoren 19 und 20 nicht verwendet.

Die Ein- und Auskoppeloptiken 11, 13, 25 und 27 weisen üblicherweise Linsen auf.

Bei dem in Fig. 1 gezeigten Ausführungsbeispiel wird die Überlagerungseinrichtung durch die Einkoppeloptik 11, die Lichtleitfaser 12, die Auskoppeloptik 13, den Spiegel 15, die Fokussieroptik 17 und die Fokussieroptik 18 gebildet. Bei dem In Fig. 2 gezeigten Vergleichsbeispiel kommen zu diesen Bauteilen noch der Farbstrahlteiler 21 und die Spiegel 22 hinzu Bei dem in Fig. 3 gezeigten zweiten Vergleichsbeispiel sind bei der Überlagerungseinrichtung im Vergleich zu dem in Fig. 2 gezeigten ersten Vergleichsbeispiel die Spiegel 22 durch die Einkoppeloptik 25, die Lichtleitfaser 26 und die Auskoppeloptik 27 ersetzt.

Hinsichtlich weiterer vorteilhafter Ausgestaltungen und Weiterbildungen des erfindungsgemäßen Mikroskop-Aufbaus wird zur Vermeidung von Wiederholungen auf den allgemeinen Teil der Beschreibung sowie auf den beigefügten Patentanspruch verwiesen.

Schließlich sei ausdrücklich darauf hingewiesen, dass das voranstehend beschriebene Ausführungsbeisplel des erfindungsgemäßen Mikroskop-Aufbaus lediglich zur Erörterung der beanspruchten Lehre dient, diese edoch nicht auf dieses Ausführungsbeispiel einschränkt.

### Bezugszeichenliste

- 1: Lichtquelle
- 2: Anregungslicht
- 3: Hauptstrahlteiler
- 4: Scaneinrichtung
- 5: Objektiv
- 6: Objekt
- 7: Kondensor
- 8: kondensorseitiges Detektionslicht
- 9: objektivseitiges Detektionslicht
- 10: Spiegel
- 11: Einkoppeloptik
- 12: Lichtleitfaser
- 13: Auskoppeloptik
- 14: ausgekoppeltes Detektionslicht
- 15: Spiegel
- 16: Farbstrahlteiler
- 17: Fokussieroptik
- 18: Fokussieroptik
- 19: Detektor
- 20: Detektor
- 21: Farbstrahlteiler
- 22: Spiegel
- 23: Detektor
- 24: Detektor
- 25: Einkoppeloptik
- 26: Lichtleitfaser
- 27: Auskoppeloptik

## Patentansprüche

1. Konfokales Scan-Mikroskop mit einer Lichtquelle (1) zur Emission von Anregungslicht (2), mit einem Hauptstrahlteiler (3), einer Scaneinrichtung (4), einem Objektiv (5), einem Kondensor (7), einer Oberlagerungseinrichtung (11, 12, 13, 15, 16, 17, 18) und einem zwei Detektoren aufweisenden Detektor-Aufbau (19, 20), und wobei den beiden Detektoren Licht unterschiedlicher Wellenlängen zugeleitet wird, wobei das Anregungslicht über den Hauptstrahlteiler zu der Scaneinrichtung reflektiert wird, wobei die Scaneinrichtung den Antegungslichtstrahl durch das Objektiv hindurch auf ein Objekt (6) führt, wobei ein durch das Objekt hindurchtretendes Transmissionslicht (2) und ein im Objekt erzeugtes Fluoreszenzlicht (8) durch den Kondensor hindurchtreten und ein kondensorseitiges Detektionslicht (2,8) bilden, und wobei vom Objekt reflektiertes Anregungslicht (2) und in dem Objekt erzeugtes Fluoreszenzlicht (9) ein objektivseitiges Detektionslicht (2,9) bilden, wobei mittels der Überlagerungseinrichtung das kondensorseitige Detektionslicht und das objektivseitige Detektionslicht (2,9) optisch überlagerbar und im Detektor-Aufbau detektierbar sind, wobei die Überlagerungseinrichtung eine Einkoppeloptik (11), eine Lichtleitfaser (12), eine Auskoppeloptik (13), einen Spiegel (15), einen Farbstrahlteiler (16) und zwei Fokussieroptiken (17, 18) aufweist, wobei das kondensorseitige Detektionslicht über die Einkoppeloptik, die Lichtleitfaser, die Auskoppeloptik, den Spiegel, den Farbstrahlteiler und die zwei Fokussieroptiken den beiden Detektoren zugeleitet wird, und wobei das objektivseitige Detektionslicht uber die Scaneinrichtung, den Hauptstrahlteiler, den Farbstrahlteiler und die zwei Fokussieroptiken den beiden Detektoren zugeleitet wird.

## Claims

1. Confocal scanning microscope comprising a light source (1) for emitting excitation light (2), having a main beam splitter (3), a scanning device (4), an objective (5), a condenser (7), a superimposition device (11, 12, 13, 15, 16, 17, 18) and a detector structure (19, 20) having two detectors, and light of different wavelengths being fed to the two detectors, the excitation light being reflected to the scanning device via the main beam splitter, the scanning device guiding the excitation light beam through the objective onto an object (6), the transmission light (2) which passes through the object, and a fluorescence light (8) produced in the object passing through the condenser and a condenser-side detection light (2, 8), and an objective-side detection light (2, 9) being formed by excitation light (2) reflected by the object and fluorescence light (9) produced in the object, in which confocal scanning microscope the condenser-side detection light and the objective-side detection light (2, 9) can be superimposed optically by means of the superimposition device and can be detected in the detector structure, the superimposition device having a coupling optics (11), an optical fibre (12), a decoupling optics (13), a mirror (15), a colour beam splitter (16) and two focusing optics (17, 18), the condenser-side detection light being fed to the two detectors via the coupling optics, the optical fibre, the decoupling optics, the mirror, the colour beam splitter and the two focusing optics, and the objective-side detection light being fed to the two detectors via the scanning device, the main beam splitter, the colour beam splitter and the two focusing optics.

## Revendications

1. Arrangement de microscope à balayage confocal avec une source lumineuse (1) pour l'émission de lumière d'excitation (2), avec un séparateur de faisceau principal (3), un dispositif de balayage (4), un objectif (5), un condenseur (7), un dispositif de superposition (11, 12, 13, 15, 16, 17, 18) et un montage de détecteurs comportant deux détecteurs (19, 20), et vers lesquels est acheminée de la lumière de différentes longueurs d'ondes, la lumière d'excitation étant réfléchie vers le dispositif de balayage à travers le séparateur de faisceau principal, le dispositif de balayage acheminant le faisceau de lumière d'excitation sur un objet (6) à travers l'objectif, une lumière de transmission (2) traversant l'objet et une lumière fluorescente (8) générée dans l'objet, traversant le condenseur, constituant une lumière de détection (2, 8) du côté condenseur, et la lumière d'excitation (2) réfléchie par l'objet et la lumière fluorescente (9) générée dans l'objet constituant une lumière de détection (2, 9) du côté objet, la lumière de détection du côté condenseur et la lumière de détection (2, 9) du côté objet étant optiquement superposables et détectables dans le montage de détecteurs grâce au dispositif de superposition, le dispositif de superposition comportant une optique de couplage d'entrée (11), une fibre optique (12), une optique de couplage de sortie (13), un miroir (15), un séparateur de faisceau de couleur (16) et deux optiques de focalisation (17, 18), la lumière de détection du côté condenseur étant acheminée vers les deux détecteurs par l'intermédiaire de l'optique de couplage d'entrée, de la fibre optique, de l'optique de couplage de sortie, du miroir, du séparateur de faisceau de couleur et des deux optiques de focalisation, et la lumière de détection du côté objet étant acheminée vers les deux détecteurs par l'intermédiaire du dispositif de balayage, du séparateur de faisceau principal, du séparateur de faisceau de couleur et des deux optiques de focalisation.
